# EUROPÄISCHE PATENTSCHRIFT

(11) **EP 2 181 055 B1**
(45) Veröffentlichungstag und Bekanntmachung des Hinweises auf die Patenterteilung: **10.10.2012**
(21) Anmeldenummer: 08801566.4
(22) Anmeldetag: 13.08.2008
(51) Int. Cl.: B65G 1/14

(54) **HORIZONTALE STAPELSÄULE**
HORIZONTAL STACKING COLUMN
COLONNE D'EMPILAGE HORIZONTALE

(30) Priorität: 16.08.2007 DE 102007038865
(43) Veröffentlichungstag der Anmeldung: 05.05.2010
(73) Patentinhaber: MTS Maschinenbau GmbH, 88512 Mengen (DE)
(72) Erfinder: STROBEL, Gustav, 88348 Bad Saulgau (DE)
(74) Vertreter: Weiss, Peter
(86) Internationale Anmeldenummer: PCT/EP2008/006655
(87) Internationale Veröffentlichungsnummer: WO 2009/021725

(56) Entgegenhaltungen:
- DE-A1- 4 113 724
- DE-U1- 29 715 704
- DE-U1- 29 718 581
- FR-A- 2 686 073
- FR-A- 2 851 553
- JP-A- 7 125 816

## Beschreibung

Die Erfindung betrifft eine horizontale Stapelsäule zum Halten von Lagergütern an Klinken, welche um jeweils zumindest eine Drehachse drehbar angeordnet sind, gemäß dem Oberbegriff des Anspruchs 1.

### STAND DER TECHNIK

Stapelsäulen sind in vielfältiger Form und Ausführung bekannt und auf dem Markt. Sie dienen in der Regel dazu, Lagergüter, insbesondere Karosserieteile, nach deren Herstellung in einer Presse aufzunehmen und zu weiteren Bearbeitungsstationen zu transportieren. Meist handelt es sich dabei um vertikale Stapelsäulen, wie sie beispielsweise in der DE 38 11 310 C2 gezeigt sind. Dabei befinden sich an Säulen übereinander drehbar gelagerte zweiarmige Klinkenhebel, die jeweils einen ein Lagergut aufnehmenden Tragarm sowie einen Steuerarm aufweisen und aus einer Ruhestellung über eine Bereitschaftsstellung in eine Arbeitsstellung und wieder zurück verschwenkbar sind, wobei beim Auflegen eines Lagergutes ein in Bereitschaftsstellung befindlicher Klinkenhebel in seine Arbeitsstellung gelangt und gleichzeitig ein darüber angeordneter Klinkenhebel durch den Steuerarm des in Arbeitsstellung gelangenden Klinkenhebels aus seiner Ruhestellung in seine Bereitschaftsstellung geschwenkt wird, wobei ferner sich die in Arbeitsstellung befindlichen Klinkenhebel gegenseitig in dieser Stellung verriegeln.

Es gibt aber auch horizontale Stapelsäulen, wie sie beispielsweise in der DE 100 53 268 A1 gezeigt sind. Die Funktion der Klinken ist aber gleich, wie bei den vertikalen Stapelsäulen. Sowohl bei den vertikalen, wie auch bei den horizontalen Stapelsäulen müssen die Lagergüter von der gleichen Seite her be- und entladen werden.

Ein derartige horizontale Stapelsäule gemäß dem Oberbegriff des Anspruchs 1 ist bereits aus FR 2 851 553 A bekannt.

### AUFGABE

Aufgabe der vorliegenden Erfindung ist es, eine horizontale Stapelsäule zu schaffen, bei der ein Be- und Entladen in der gleichen Bewegurigsrichtung erfolgen kann.

### LÖSUNG DER AUFGABE

Zur Lösung der Aufgabe führt, dass die Schwenkbewegung der Klinke von einer bogenförmigen Kulisse begrenzt ist, wobei in zumindest eine Seitenwange die bogenförmige Kulisse eingeformt ist, in welcher ein von zumindest einem Schwenkhebel abragender Führungsstift geführt ist.

Das bedeutet, dass die Klinken sich sowohl beim Beladen als auch beim Entladen in einer Ruhelage befinden können, in der die Klinken zwischen den Seitenwangen der Stapelsäule versenkt sind. Beim Beladen der Stapelsäule befinden sich alle Klinken bis auf die vorderste Klinke in Ruhelage, so dass ein Ladegut über die Stapelsäule geführt werden kann, bis das Ladegut die vorderste Klinke erreicht. Diese wird dann in Arbeitsstellung geschoben, wodurch eine nachfolgende Klinke in Bereitschaftsstellung gelangt. Dieser Vorgang wiederholt sich, bis die gesamte Stapelsäule beladen ist.

Beim Entladen wird die vorderste Klinke nach vorne weg von dem ersten Ladegut in die zweite Ruhelage bewegt, in der sich die Klinke zwischen den Seitenwangen der Stapelsäule befindet. Das Ladegut kann entnommen werden, so dass die nachfolgende Klinke beim Fehlen dieses Ladegutes in die zweite Ruhelage fällt. Dies geschieht ebenfalls solange, bis alle Ladegüter aus der Stapelsäule entfernt sind.

Zum Drehen der Klinken soll jede Klinke über zumindest einen Schwenkhebel mit einer Drehachse verbunden sein. Wird jedoch noch zusätzlich gewünscht, dass die Klinke in einer vorgegebenen Ausrichtung im Raum verbleibt, so sind zwei Schwenkhebel über jeweils eine Drehachse drehbar und bilden mit der Klinke andernends der Drehachsen jeweils eine weitere Achse, wobei die Schwenkhebel dann parallelogrammartig angeordnet sind.

In einem bevorzugten Ausführungsbeispiel der Erfindung ist jeder Schwenkhebel gabelartig ausgebildet, wobei die gabelartige Ausbildung einstückig erfolgt. Der Schwenkhebel umgreift dabei teilweise gabelartig die Klinke und ist mit der Klinke über die eben erwähnte Achse gelenkig verbunden.

Um ein Zusammenwirken der Klinke miteinander zu gewährleisten, sollen die Klinken über Verbindungsstreifen miteinander gekoppelt sein. Die Funktionsweise dieser Verbindungsstreifen wird beispielsweise in der DE DE 19747 578 A1 oder der DE 101 03 448 A1 näher beschrieben, weshalb auf diese Schrift besonders Bezug genommen wird. Der Verbindungsstreifen gewährleistet vor allem, dass bei einer Bewegung der Klinke die nachfolgende Klinke in Bereitschaftsstellung gebracht wird. Ferner bewirkt er, dass alle Klinken, bis auf die vorderste Klinke auch gemeinsam in ihre anfängliche Ruhelage gebracht werden können.

Die gesamte Anordnung aus Klinken- und Schwenkhebeln zusammen mit Verbindungsstreifen befinden sich bevorzugt zwischen zwei Seitenwangen, mit denen die Drehachsen der Schwenkhebel eine gelenkige Verbindung eingehen. Zwischen diesen beiden Seitenwangen können die Klinken in ihrer ersten und zweiten Ruhelagen verschwindet.

Der Weg der Klinken von der ersten in die zweite Ruhelage und zurück wird durch eine bogenförmige Kulisse in zumindest einer Seitenwange begrenzt, in der ein von zumindest einem Schwenkhebel abragender Führungsstift geführt ist. Dabei verläuft die Kulisse in einem Radius um die Drehachse herum.

Zwischen den beiden Ruhelagen muss jedoch noch die Möglichkeit bestehen, die Klinken in einer Arbeitsstellung festzulegen. Dies geschieht durch einen Riegelhebel, der an einem Ende eine Schwenkachse mit einer Seitenwange ausbildet. Dieser Riegelhebel ist so ausgestaltet, dass er in die lichte Weite der Kulisse eingreifen kann. Er besitzt eine Einrichtung zum Festhalten des Führungsstiftes in Arbeitsstellung. In einem Ausführungsbeispiel kann diese Einrichtung durch einen Riegelwinkel im Zusammenwirken mit einem Gegenhalter gebildet werden. Riegelwinkel und Gegenhalter sind jeweils um eine Schwenkachse drehbar an dem Riegelhebel angeordnet, so dass sie miteinander einen Öffnungswinkel ausbilden können. Beim Entlanggleiten des Führungsstiftes entlang der bogenförmigen Kulisse trifft der Führungsstift auf eine Kurve des Gegenhalters und hebt diesen an. Dies bewirkt gleichzeitig, dass der Riegelwinkel über den Gegenhalter vorsteht, so dass der Führungsstift frontal auf den Riegelwinkel auftrifft. Der Führungsstift schwenkt nun diesen Riegelwinkel um dessen Schwenkachse, weg von dem Gegenhalter. Gleichzeitig fällt der Gegenhalter hinter dem Führuhgsstift nach unten, so dass der Führungsstift in dem Öffnungswinkel zwischen Riegelwinkel und Gegenhalter gehalten ist. Wird jetzt die Schwenkbewegung des Riegelwinkels durch einen Anschlag begrenzt, wird auch der Führungsstift in diesem Öffnungswinkel festgelegt.

Damit der Riegelwinkel später wieder in seine Ausgangslage, d.h., in seine Anlage an dem Gegenhalter zurück gelangt, ist an ihm ein Gewicht vorgesehen.

In einem bevorzugten Ausführungsbeispiel kann jeder einzelne Riegelhebel entriegelt werden, wozu ein Finger vorgesehen ist, der von aussen her abgreifbar ist, wodurch der Riegelhebel um die Schwenkachse dreht, so dass er aus dem Bereich der Kulisse herausgelangt und der Führungsstift aus dem oben beschriebene Öffnungswinkel herausgleitet.

Es ist jedoch auch vorgesehen, alle Riegelhebel gemeinsam zu entriegeln. Dies geschieht bevorzugt durch einen Schubstreifen, welcher für jeden Riegelhebel eine Auflauframpe aufweist, die mit einem Gleitfuss an dem Riegelhebel zusammenwirkt.

Damit alle Klinken in ihre Ausgangslage zum Beladen der Stapelsäule zurück gelangen können, soll in einem bevorzugten Ausführungsbeispiel der Erfindung der vordersten Klinke ein Druckrahmen zugeordnet sein, der um eine Mittelachse schwenkbar ist. Wird dieser Druckrahmen geschwenkt, drückt er mit einer Querrolle die vorderste Klinke in deren Bereitschaftsstellung, wobei die Bewegungsmöglithkeit dieser vordersten Klinke durch ein Verkürzen der Kulisse begrenzt ist. Mit dieser Bewegung der vordersten Klinke werden jedoch auch die nachfolgenden Klinken über die Verbindungsstreifen soweit beweg,t dass die diesen Klinken zugeordneten Schwenkhebel jeweils über ihren Tot-bzw. Scheitelpunkt gelangen und in die erste Ruhelage zurückfallen. Das Ganze geschieht bevorzugt ebenfalls mittels des oben erwähnten Schübstreifens, der eine entsprechende Verbindung mit dem Druckrahmen anderhends der Querrolle aufweist.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivische Ansicht einer erfindungsgemässen horizontalen Stapelsäule;
Figur 2 eine vergrössert dargestellte Draufsicht auf die Stapelsäule gemäss Figur 1;
Figur 3 einen Längsschnitt durch die Stapelsäule gemäss Figur 2 entlang Linie III-III;
Figur 4 eine Seitenansicht der Stapelsäule gemäss Figur 2 bei abmontiertem Deckblech;
Figur 5 die andere Seitenansicht der Stapelsäule gemäss Figur 1;
Figur 6 eine perspektivische Ansicht einer Mehrzahl von Klinken und deren Bewegungsmechanik im vorderen Bereich;
Figur 7 eine perspektivische Ansicht von Klinken und Elementen der Stapelsäule aus dem hinteren Bereich;
Figur 8 eine vergrössert dargestellte perspektivische Ansicht eines erfindungsgemässen Schwenkhebels.

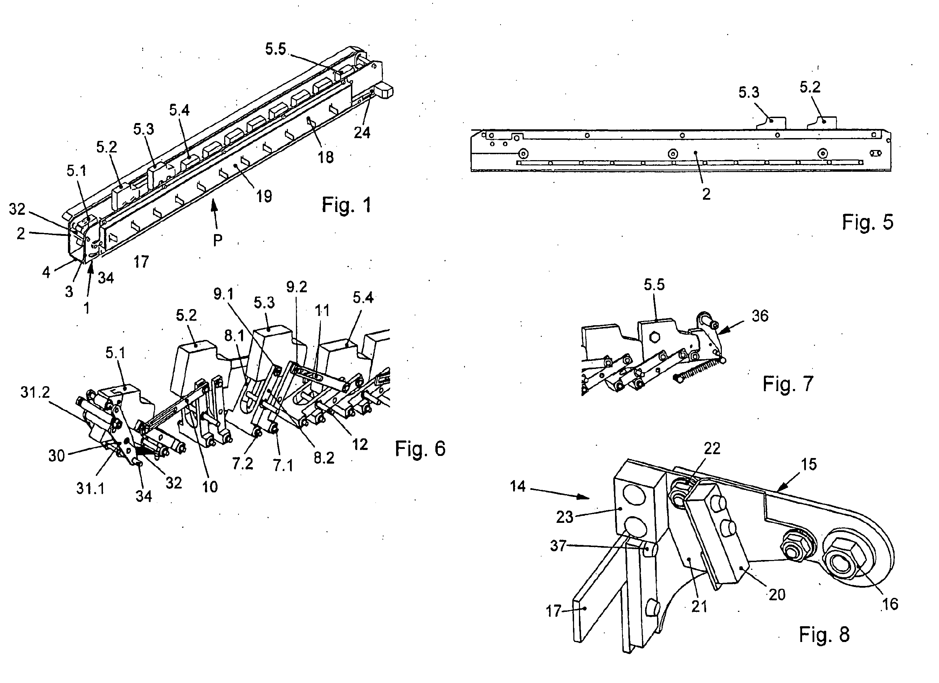

Eine erfindungsgemässe horizontale Stapelsäule P weist gemäss den Figuren 1 bis 5 einen U-förmigen Rahmen 1 auf. Dieser Rahmen 1 bildet zwei Seitenwangen 2 und 3 aus, die durch einen Bodenstreifen 4 miteinander verbunden sind.

Zwischen den beiden Seitenwangen 2 und 3 ist eine Mehrzahl von Klinken 5 vorgesehen. Dabei sind nur die vorderste Klinke 5.1, die nachfolgenden Klinken 5.2, 5.3 und 5.4 und die hinterste Klinke 5.5 gekennzeichnet.

Jeder Klinke 5 sind jeweils zwei Schwenkhebel 6.1 und 6.2 zugeordnet, wobei jeder Schwenkhebel 6.1, 6.2 eine Drehachse 7.1 und 7.2 aufweist, welche in der Seitenwange 2 und 3 drehbar angeordnet sind und um welche die Schwenkhebel 6.1 und 6.2 schwenken können. Dabei ist jeder Schwenkhebel 6.1 bzw. 6.2 gabel- bzw. U-förmig ausgebildet und einstückig hergestellt, wobei zwei Gabellaschen 8.1 und 8.2 zwischen sich eine Klinke 5.3 aufnehmen. Im übrigen sind die Schwenkhebel 6.1 und 6.2 zueinander parallelogrammartig angeordnet und bilden mit der ihnen zugeordneten Klinke 5 jeweils eine Achse 9.1 bzw. 9.2 aus. Die Achse 9.2 der jeweils vorderen Klinke ist über einen Verbindungsstreifen 10 mit der jeweiligen. Achse 9.1 der nachfolgenden Klinke gelenkig verbunden, wobei die Achse 9.2 dabei ein Langloch 11 in dem Verbindungsstreifen 10 durchsetzt.

Von dem Schwenkhebel 6.2 ragt nach aussen ein Führungsstift 12 ab, der in Gebrauchslage in eine bogenförmige Kulisse 13 in der Seitenwange 3 eingreift und in dieser Kulisse 13 beim Schwenken des Schwenkhebels 6.2 geführt ist.

Der Kulisse 13 bzw. dem Führungsstift 12 ist aussen an der Seitenwange 3 ein Riegelhebel 14 zugeordnet. Dieser Riegelhebel ist in Figur 8 näher gezeigt. Er weist im wesentlichen einen flachen Winkelstreifen 15 auf, der über eine Schwenkachse 16 mit der Seitenwange 3 verbunden ist. Beim Drehen um die Schwenkachse 16 greift der Winkelstreifen 14 zumindest teilweise in die lichte Weite der Kulisse 13 ein. Damit der Riegelhebel 14 um die Schwenkachse 16 bewegt werden kann, steht von dem Winkelstreifen 15 ein Finger 17 nach aussen ab, der in der in Figur 1 gezeigten Gebrauchslage durch eine entsprechende Öffnung 18 eines Deckbleches 19 hindurchgreift und so von aussen her angreifbar ist.

An dem Winkelstreifen 15 befindet sich des weiteren drehbar um eine Schwenkächse ein Gegenlager 20, welches mit einem Riegelwinkel 21 zusammenwirkt. Dieser Riegelwinkel 21 dreht ebenfalls um eine Schwenkachse 22, welche den Riegelwinkel 21 mit dem Winkelstreifen 15 verbindet. Gegenüber dem Gegenlager 20 ist jenseits der Schwenkachse 22 an dem Riegelwinkel 21 noch ein Gewicht 23 vorgesehen.

Unterhalb des Deckbleches 19 ist ein Schubstreifen 24 als Einrichtung zum Eingrenzen der Schwenkbewegung der Riegelhebel 14 an der Seitenwange 3 angeordnet. Die Schubbewegung der Schubstange ist durch Bolzen 25 begrenzt, welche in achsparallel verlaufende Langlöcher 26 in dem Schubstreifen 24 eingreifen. Die Bolzen 25 verbinden dabei einen Haltestreifen 26 mit der Seitenwange 3.

Der Schubstreifen 24 ist sägezahnartig ausgestaltet, wobei an jedem Zahn 27 eine Auflauframpe 28 ausgebildet ist. Diese Auflauframpe 28 wirkt mit einem Gleitfuss 29 des Riegelhebels 14 zusammen, so dass bei einem Auflaufen des Gleitfusses 29 auf die Auflauframpe 28 der Riegelhebel 14 um die Schwenkachse 16 gedreht wird.

Der vordersten Klinke 5.1 ist ein Druckrahmen 30 zugeordnet, der in Figur 6 besser erkennbar ist. Der Druckrahmen 30 besteht im wesentlichen aus zwei Seitenrahmen 31.1 und 31.2, welche über eine Mittelachse 32, eine Querrolle 33 und einem Stift 34 miteinander verbunden sind. Der Druckrahmen 30 ist dabei bevorzugt gegen die Kraft eines Kraftspeichers um die Mittelachse 32 schwenkbar. Der Stift 34 durchgreift seitlich ein bogenförmiges Langloch 35 in der Seitenwange 3 und geht danach eine gelenkige Verbindung mit dem Schubstreifen 24 ein.

Der letzten Klinke 5.5 ist gemäss Figur 7 eine Verriegelungseinrichtung 36 zugeordnet.

Die Funktionsweise der vorliegenden Erfindung ist folgende:

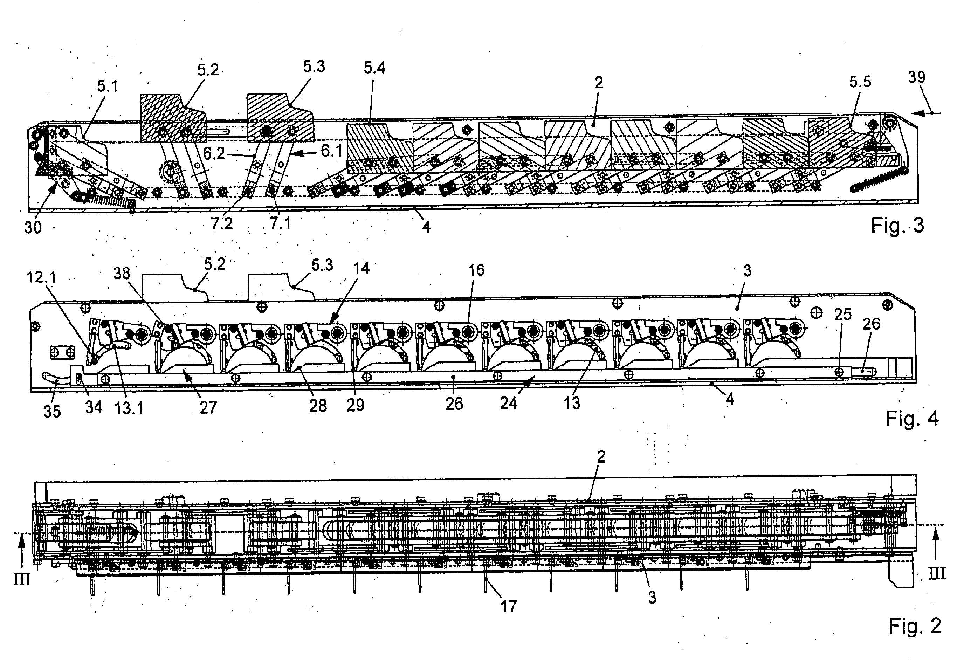

In Ausgangslage befinden sich sämtliche Klinken bis auf die vorderste Klinke 5.1, in der für die Klinke 5.4 in Figur 3 gezeigten versenkten Lage zwischen den beiden Seitenwangen 2 und 3. Wird deshalb die Stapelsäule P von rechts her mit einem Ladegut beladen, so stören diese Klinken das Überfahren der Seitenwangen 2 und 3 nicht. Lediglich die vorderste Klinke 5.1 befindet sich in Bereitschaftsstellung, weshalb deren Kulisse 13.1 verkürzt bogenförmig ausgestaltet ist. D.h., dass sich der Führungsstift 12.1 des entsprechenden Schwenkhebels für diese Klinke 5.1 am rechtsseitigen Ende der Kulisse 13.1 befindet und die nachfolgende Klinke 5.2 gänzlich zwischen den Seitenwangen 2 und 3 aufgenommen ist.

Wird nun ein Ladegut entlang der Stapelsäule auf die vorderste Klinke 5.1 zubewegt und drückt die Klinke 5.1 nach links, gelangt diese aus ihrer Bereitschaftslage in eine Arbeitsstellung, wie sie für die Klinke 5.2 gezeigt ist. Der Führungsstift 12 trifft dabei auf eine schräge Kante 41 des Gegenhalters 20, wodurch dieser infolge Drehung um die Schwenkachse 40 angehoben wird. Dadurch wird auch das untere Ende des Riegelwinkel 21 freigelegt, das in die lichte Weite der Kulisse 13.1 vorsteht. Der Führungsstift schwenkt nun diesen Riegelwinkel 21 auf, bis der Riegelwinkel 21 an dem Finger 17 bzw. einem Anschlag 37 anschlägt. Jetzt fällt der Gegenhalter 20 hinter dem Führungsstift 12 nach unten und der Führungsstift fährt bei der Schwenkbewegung des Riegelhebels 14 in einen Öffnungswinkel 38 ein, der zwischen dem Riegelwinkel 21 und dem Gegenlager 20 gebildet wird. Gleichzeitig schlägt der Gleitfuss 29 an dem Schubstreifen 24 an, so dass eine weitere Bewegung des Riegelhebels 14 verhindert ist. Hierdurch ist der Führungsstift 12.1 in dem Öffnungswinkel 38 festgelegt und die Klinke 5.1 befindet sich in Arbeitsstellung.

Durch diese Bewegung von der Bereitschaftslage in die Arbeitsstellung hat jedoch die vorderste Klinke 5.1 über den Verbindungsstreifen 10 die nachfolgende Klinke 5.2 mitgenommen und diese in Bereitschaftsstellung gebracht, weiche in Figur 3 für die Klinke 5.3 gezeigt ist. In Bereitschaftslage der Klinke 5.2 befindet sich allerdings die Klinke 5.3 noch in Ruhelage versenkt zwischen den beiden Seitenwangen 2 und 3. Erst wenn die Klinke 5.2 durch ein Einbringen des nächsten Lagergutes in Arbeitsstellung gelangt, wird diese Klinke 5.3 auch in Bereitschaftslage gebracht. Das Verriegeln der Klinken 5.2, 5.3, 5.4 und der nachfolgenden Klinken, auch der letzten Klinke 5.5 in ihren Arbeitsstellungen erfolgt auf die gleiche Art und Weise, wie zu der vordersten Klinke beschrieben. Schlussendlich wird die Verriegelungseinrichtung 36 betätigt, wodurch die letzte Klinke 5.1 in ihrer Arbeitsstellung festgelegt wird

Zum Entladen wird der Schubstreifen 24 betätigt und nach links verschoben. Dabei gleiten die Gleitfüsse 29 der Riegelhebel 14 auf ihren jeweiligen zugeordneten Auflauframpen 28 auf, so dass jeder Riegelhebel 14 um seine Schwenkachse 16 dreht. Der Riegelhebel gelangt somit aus der lichten Weite der jeweiligen Kulisse 13 und der jeweilige Führungsstift 12 gleitet aus dem jeweiligen Öffnungswinkel 38 zwischen Riegelwinkel 21 und Gegenlager 20. Das Gewicht 23 an dem Riegelwinkel 21 bewirkt nun, dass sich der Öffnungswinkel 38 zwischen Riegelwinkel 21 und Gegenlager 20 schliesst und das untere Ende des Riegelwinkels 21 wieder bei einem nächsten Beladevorgang von dem Führungsstift 12 angegriffen werden kann.

Wird nun das vorderste Ladegut entladen, so gleitet der vorderste Führungsstift 12.1 in der Kulisse 13.1 in seine in Figur 4 gezeigte Lage, was bewirkt, dass die vorderste Klinke 5.1 zwischen den Seitenwangen 2 und 3 verschwindet, wie dies in den Figuren 1 und 3 dargestellt ist. D.h., das Ladegut ist frei und kann in der gleichen Richtung entladen werden, wie es auch in die Ladeposition gebracht und durch den Pfeil 39 dargestellt ist.

Nach dem Entladen des vordersten Ladegutes fehlt es an einem Widerlager für die nachfolgende Klinke 5.2, so dass diese auch durch den Verbindungsstreifen 10 nachgezogen wird und hinter der vordersten Klinke 5.1 zwischen den Seitenwangen 2 und 3 in die Ruhelage verschwindet.

Sind sämtliche Ladegüter entladen, müssen die Klinken wieder in ihre Ausgangsposition gebracht werden. Dies geschieht durch Betätigung des Druckrahmens 30 mittels des Schubstreifens 24. Die vorderste Klinke 5.1 liegt, wie insbesondere in Figur 1 und 6 gezeigt, der Querrolle 33 des Druckrahmen 30 an. Wird nun dieser Druckrahmen 30 durch den Schubstreifen 24 um die Mittelachse 32 geschwenkt, so wird die vorderste Klinke 5.1 und mit ihr die nachfolgenden Klinken nach rechts verschoben, so dass diese bzw. deren Schwenkhebel 6.1 und 6.2 um die jeweiligen Drehachsen 7.1 und 7.2 drehen, bis sich die vorderste Klinke 5.1 in der oben. geschilderten Bereitschaftslage befindet. Dabei haben aber die jeweiligen Verbindungsstreifen. 10 die nachfolgenden Klinken über deren jeweiligen Scheitelpunkt gedreht, so dass diese Klinken in ihre rechtsseitige Ruhelage zwischen den beiden Seitenwangen 2 und 3 fallen. Das Beladen kann jetzt von vorne beginnen.

### Bezugszeichenliste

| | | | | | |
|---|---|---|---|---|---|
| 1 | Rahmen | 34 | Stift | 67 | |
| 2 | Seitenwange | 35 | Langloch | 68 | |
| 3 | Seitenwange | 36 | Verriegelungseinrichtung | 69 | |
| 4 | Bodenstreifen | 37 | Anschlag | 70 | |
| 5 | Klinke | 38 | Öffnungswinkel | 71 | |
| 6 | Schwenkhebel | 39 | Be- u.Entladevorrichtung | 72 | |
| 7 | Drehachse | 40 | Schwenkachse | 73 | |
| 8 | Gabellasche | 41 | Kante | 74 | |
| 9 | Achse | 42 | | 75 | |
| 10 | Verbindungsstreifen | 43 | | 76 | |
| 11 | Langloch | 44 | | 77 | |
| 12 | Führungsstift | 45 | | 78 | |
| 13 | Kulisse | 46 | | 79 | |
| 14 | Riegelhebel | 47 | | | |
| 15 | Winkelstreifen | 48 | | | |
| 16 | Schwenkachse | 49 | | | |
| 17 | Finger | 50 | | | |
| 18 | Öffnung | 51 | | P | Stapelsäule |
| 19 | Deckblech | 52 | | | |
| 20 | Gegenlager | 53 | | | |
| 21 | Riegelwinkel | 54 | | | |
| 22 | Schwenkachse | 55 | | | |
| 23 | Gewicht | 56 | | | |
| 24 | Schubstreifen | 57 | | | |
| 25 | Bolzen | 58 | | | |
| 26 | Haltestreifen | 59 | | | |
| 27 | Zahn | 60 | | | |
| 28 | Auflauframpe | 61 | | | |
| 29 | Gleitfuss | 62 | | | |
| 30 | Druckraum | 63 | | | |
| 31 | Seitenrähmen | 64 | | | |
| 32 | Mittelachs4e | 65 | | | |
| 33 | Querrolle | 66 | | | |

## Patentansprüche

1. Horizontale Stapelsäule zum Halten von Lagergütern an Klinken (5), welche um jeweils zumindest eine Drehachse (7.1,7.2) drehbar angeordnet sind, wobei zumindest ein Teil der Klinken (5) um mehr als 90° um die Drehachse (7.1,7.2) schwenkbar ist, wobei die Drehachseln (7.1, 7.2) zwischen zwei Seitenwangen (2,3) erstrecken.
**dadurch gekennzeichnet,**
**dass** die Schwenkbewegung der Klinke (5) von einer bogenförmigen Kulisse (13) begrenzt ist, wobei
in zumindest eine Seitenwange (3) die bogenförmige Kulisse (13) eingeformt ist, in welcher ein von zumindest einem Schwenkhebel (6.2) abragender Führungsstift (12) geführt ist.

2. Stapelsäule nach Anspruch 1, **dadurch gekennzeichnet, dass** die Kulisse (13) in einem Radius um eine Drehachse (7.2) herum verläuft.

3. Stapelsäule nach wenigstens einem der Ansprüche 1 bis 2, **dadurch gekennzeichnet, dass** die Klinke (5) über zumindest einen Schwenkhebel (6.1, 6.2) mit ihrer Drehachse (7.1, 7.2) verbunden ist.

4. Stapelsäule nach wenigstens einem der Ansprüche 1 bis 3, **dadurch gekennzeichnet, dass** die Klinke (5) über zumindest zwei Schwenkhebel (6.1, 6.2) mit zumindest zwei Drehachsen (7.1, 7.2) verbunden ist.

5. Stapelsäule nach Anspruch 4, **dadurch gekennzeichnet, dass** die beiden Schwenkhebel (6.1, 6.2) parallelogrammartig zwischen Klinke (5) und Drehachsen (7.1, 7.2) angeordnet sind.

6. Stapelsäule nach wenigstens einem der Ansprüche 1 bis 5 **dadurch gekennzeichnet, dass** die Klinken (5) über Verbindungsstreifen (10) miteinander gekoppelt sind, wobei der Verbindungsstreifen (10) jeweils beidends mit je einer Achse (9.1, 9.2) von Schwenkhebeln (6.1,6.2) von benachbarten Klinken (5) verbunden ist, und zumindest eine der Achsen (9.1, 9.2) in einem Langloch (11) entlang dem Verbindungsstreifen (10) rührbar ist.

7. Stapelsäule nach wenigstens einem der Ansprüche 1 bis 6, **dadurch gekennzeichnet, dass** der Klinke (5) eine Einrichtung zum Festlegen der Klinke in einer Arbeitsstellung zwischen zwei Ruhelagen zugeordnet ist, wobei sich die Klinke (5) in beiden Ruhelagen versenkt zwischen den beiden Seitenwangen (2,3) befindet.

8. Stapelsäule nach Anspruch 7, **dadurch gekennzeichnet, dass** der Arbeitsstellung der Klinke (5) noch eine Bereitschaftslage vorgeschaltet ist.

9. Stapelsäule nach Anspruch 7 oder 8, **dadurch gekennzeichnet, dass** die Einrichtung zum Festlegen der Klinke (5) aus einem winkelförmigen Riegelhebel (14) besteht, der um eine Schwenkachse (16) dreht und dabei die lichte Weite der Kulisse (13) verändert.

10. Stapelsäule nach Anspruch 9, **dadurch gekennzeichnet, dass** an dem Riegelhebel (14) ein Riegelwinkel (21) zur Aufnahme des Führungsstiftes (12) zwischen sich und einem Gegenhalter (20) angeordnet ist, wobei dass der Riegelwinkel (21) und Gegenhalter (20) jeweils um eine Schwenkachse (22, 40) drehbar sind.

11. Stapelsäule nach Anspruch 10, **dadurch gekennzeichnet, dass** an dem Riegelwinkel (21) ein Gewicht (23) vorgesehen ist, welches den Riegelwinkel (21) gegen den Gegenhalter (20) drückt.

12. Stapelsäule nach einem der Ansprüche 9 bis 11, **dadurch gekennzeichnet, dass** von dem Riegelhebel (14) ein Finger (17) zum Drehen des Riegelhebel (14) um seine Schwenkachse (16) abragt.

13. Stapelsäule nach wenigstens einem der Ansprüche 1 bis 12, **dadurch gekennzeichnet, dass** einer vordersten Klinke (5.1) eine Einrichtung (30) zum Schwenken der Klinken (5) von einer zweiten Ruhelage in eine anfängliche Ruhelage zugeordnet ist.

14. Stapelsäule nach Anspruch 13, **dadurch gekennzeichnet, dass** die Einrichtung zum Schwenken der Klinken (5) einen Druckrahmen (30) aufweist, der um eine Mittelachse (32) schwenkbar ist, und einends mit einer Querrolle (33) gegen die vorderste Klinke (5.1) drückt und anderenends mit einer Betätigungseinrichtung (24) verbunden ist, welche gleichzeitig auch die Einrichtung zum Begrenzen der Schwenkbewegung des Riegelhebels (14) ist.

## Claims

1. A horizontal stacking column for holding stored articles on pawls (5) which are arranged rotatably about at least one rotary spindle (7.1, 7.2), wherein at least some of the pawls (5) are pivotable by more than 90° about the rotary spindle (7.1, 7.2), the rotary spindles (7.1, 7.2) extending between two side cheeks (2, 3),
**characterised in that**
the pivoting movement of the pawl (5) is limited by an arcuate slotted link (13), with the arcuate slotted link (13) being formed into at least one side cheek (3), in which slotted link a guide pin (12) which protrudes from at least one pivoted lever (6.2) is guided.

2. A stacking column according to Claim 1, **characterised in that** the slotted link (13) extends in a radius about a rotary spindle (7.2).

3. A stacking column according to at least one of Claims 1 to 2, **characterised in that** the pawl (5) is connected to its rotary spindle (7.1, 7.2) via at least one pivoted lever (6.1, 6.2).

4. A stacking column according to at least one of Claims 1 to 3, **characterised in that** the pawl (5) is connected to at least two rotary spindles (7.1, 7.2) via at least two pivoted levers (6.1, 6.2).

5. A stacking column according to Claim 4, **characterised in that** the two pivoted levers (6.1, 6.2) are arranged in the manner of a parallelogram between the pawl (5) and the rotary spindles (7.1, 7.2).

6. A stacking column according to at least one of Claims 1 to 5, **characterised in that** the pawls (5) are coupled together via connecting strips (10), the connecting strip (10) being connected in each case at both ends to one spindle (9.1, 9.2) in each case of pivoted levers (6.1, 6.2) of adjacent pawls (5), and at least one of the spindles (9.1, 9.2) being able to be guided in an elongate hole (11) along the connecting strip (10).

7. A stacking column according to at least one of Claims 1 to 6, **characterised in that** a means for fixing the pawl in an operating position between two rest positions is associated with the pawl (5), the pawl (5) in both rest positions being embedded between the two side cheeks (2, 3).

8. A stacking column according to Claim 7, **characterised in that** the operating position of the pawl (5) is preceded by another, readiness, position.

9. A stacking column according to Claim 7 or 8, **characterised in that** the means for fixing the pawl (5) consists of an angular locking lever (14) which rotates about a pivot spindle (16) and in so doing changes the internal width of the slotted link (13).

10. A stacking column according to Claim 9, **characterised in that** on the locking lever (14) an angled locking piece (21) for receiving the guide pin (12) is arranged between it and a counter-support (20), that the angled locking piece (21) and counter-support (20) each being rotatable about a pivot spindle (22, 40).

11. A stacking column according to Claim 10, **characterised in that** a weight (23) is provided on the angled locking piece (21) which presses the angled locking piece (21) against the counter-support (20).

12. A stacking column according to one of Claims 9 to 11, **characterised in that** a finger (17) for turning the locking lever (14) about its pivot spindle (16) projects from the locking lever (14).

13. A stacking column according to at least one of Claims 1 to 2, **characterised in that** a means (30) for pivoting the pawls (5) from a second rest position into an initial rest position is associated with a foremost pawl (5.1).

14. A stacking column according to Claim 13, **characterised in that** the means for pivoting the pawls (5) has a pressure frame (30) which is pivotable about a central spindle (32), and at one end presses with a transverse roller (33) against the foremost pawl (5.1) and at the other end is connected to an actuating means (24) which at the same time is also the means for limiting the pivoting movement of the locking lever (14).

## Revendications

1. Colonne d'empilage horizontale destinée à maintenir des produits à stocker sur des poignées (5) disposées, chacune, de manière rotative autour d'au moins un axe de rotation (7.1, 7.2), au moins une partie des poignées (5) étant pivotables de plus de 90° autour de l'axe de rotation (7.1, 7.2), les axes de rotation (7.1, 7.2) s'étendant entre deux joues latérales (2, 3),
**caractérisée par le fait**
**que** le mouvement de pivotement de la poignée (5) est limité par une coulisse en forme d'arc (13), la coulisse en forme d'arc (13) étant formée dans au moins une joue latérale (3) dans laquelle est guidée un doigt de guidage (12) faisant saillie par rapport à au moins un levier de pivotement (6.2).

2. Colonne d'empilage selon la revendication 1, **caractérisée par le fait que** la coulisse (13) s'étend selon un rayon autour d'un axe de rotation (7.2).

3. Colonne d'empilage selon au moins l'une des revendications 1 à 2, **caractérisée par le fait que** la poignée (5) est reliée par l'intermédiaire d'au moins un levier de pivotement (6.1, 6.2) à son axe de rotation (7.1, 7.2).

4. Colonne d'empilage selon au moins l'une des revendications 1 à 3, **caractérisée par le fait que** la poignée (5) est reliée par l'intermédiaire d'au moins deux leviers de pivotement (6.1, 6.2) à au moins deux axes de rotation (7.1, 7.2).

5. Colonne d'empilage selon la revendication 4, **caractérisée par le fait que** les deux leviers de pivotement (6.1, 6.2) sont disposés en forme de parallélogramme entre la poignée (5) et les axes de rotation (7.1, 7.2).

6. Colonne d'empilage selon au moins l'une des revendications 1 à 5, **caractérisée par le fait que** les poignées (5) sont couplées entre elles par l'intermédiaire de bandes de connexion (10), la bande de connexion (10) étant reliée à chacune de ses deux extrémités à chaque fois un axe (9.1, 9.2) de leviers de pivotement (6.1, 6.2) de poignées (5) adjacentes et au moins l'un des axes (9.1, 9.2) pouvant être guidé dans un trou oblong (11) le long de la bande de connexion (10).

7. Colonne d'empilage selon au moins l'une des revendications 1 à 6, **caractérisée par le fait qu'**à la poignée (5) est associé un dispositif pour fixer la poignée dans un position de travail entre deux positions de repos, la poignée (5) se trouvant, dans les deux positions de repos, enfoncée entre les deux parois latérales (2, 3).

8. Colonne d'empilage selon la revendication 7, **caractérisée par le fait qu'**avant la position de travail de la poignée (5) est encore connectée une position de mise à disposition.

9. Colonne d'empilage selon la revendication 7 ou 8, **caractérisée par le fait que** le dispositif pour fixer la poignée (5) consiste en un levier de verrou (14) en forme d'équerre qui tourne autour d'un axe de pivotement (16) et modifie ainsi le diamètre nominal de la coulisse (13).

10. Colonne d'empilage selon la revendication 9, **caractérisée par le fait que** sur le levier de verrou (14) est disposée une équerre de verrou (21) destinée à recevoir le doigt de guidage (12) entre cette dernière et un support antagoniste (20), l'équerre de verrou (21) et le support antagoniste (20) étant, chacun, rotatif autour d'un axe de pivotement (22, 40).

11. Colonne d'empilage selon la revendication 10, **caractérisée par le fait que** sur l'équerre de verrou (21) est prévu un poids (23) qui pousse l'équerre de verrou (21) contre le support antagoniste (20).

12. Colonne d'empilage selon l'une des revendications 9 à 11, **caractérisée par le fait que** du levier de verrou (14) fait saillie un doigt (17) destiné à faire tourner le levier de verrou (14) autour de son axe de pivotement (16).

13. Colonne d'empilage selon au moins l'une des revendications 1 à 12, **caractérisée par le fait qu'**à une poignée la plus en avant (5.1) est associé un dispositif (30) destiné à faire pivoter les poignées (5) d'une deuxième position de repos en une position de repos initiale.

14. Colonne d'empilage selon la revendication 13, **caractérisée par le fait que** le dispositif destiné à faire pivoter les poignées (5) présente un cadre de poussée (30) qui est pivotable autour d'un axe central (32) et pousse, à une extrémité, par un rouleau transversal (33) contre la poignée la plus en avant (5.1) et est, à l'autre extrémité, relié à un dispositif d'actionnement (24) qui est en même temps également le dispositif destiné à limiter le mouvement de pivotement du levier de verrou (14).
